# DEMANDE DE BREVET EUROPEEN

(11) **EP 2 355 452 A1**
(43) Date de publication de la demande: **10.08.2011**
(21) Numéro de dépôt: 10196020.1
(22) Date de dépôt: 20.12.2010
(51) Int. Cl.: H04L 29/08, G06F 17/30, H04L 29/06, H04M 3/493

(54) **Aide à l'accès à des informations localisées sur un serveur de contenu depuis un terminal de communication**

(30) Priorité: 25.01.2010 FR 1050472
(71) Demandeur: Alcatel Lucent, 75007 Paris (FR)
(72) Inventeur: Cabasse, Gilbert, 29228, BREST (FR); Moulehiawy, Abdelkrim, 92707, COLOMBES (FR); Leclerc, Ludovic, 92707, COLOMBES (FR)
(74) Mandataire: Chaffraix, Sylvain

(57) **Abrégé**

Dispositif (D) d'aide à l'accès par un terminal de communication (T) à des informations disponibles sur un serveur de contenu (S), comportant des moyens de commande (M_{C}) adapté pour recevoir des commandes (C) d'une interface homme machine du terminal de communication (T) afin de piloter la transmission des informations, et des moyens de statistiques (M_{S}) prévus pour mesurer le nombre d'accès aux informations et la quantité d'informations consultées.

## Description

La présente invention concerne l'aide à la navigation sur le web ou tout autre réseau ou serveur de contenu.

Dans ces réseaux, la plupart du contenu est de nature textuel. Même si les sites et serveurs de contenus proposent de plus en plus de contenus multimédias (audio/vidéo, en téléchargement ou en écoute continu (« streaming »)...), une part importante du contenu disponible demeure de nature textuelle.

Certains serveurs de contenus peuvent proposer différents formats du même contenu. Ainsi, on peut trouver des reportages audiovisuels et également des transcriptions textuelles de ces reportages.

Néanmoins, cette disponibilité d'un contenu en plusieurs formats est à la charge du serveur de contenu. En pratique, très peu offre cette possibilité, et la possibilité n'existe au mieux que pour certains contenus prédéfinis d'un serveur de contenu.

Or certains utilisateurs peuvent nécessiter un accès plus large à des contenus vocaux. Il peut par exemple s'agir d'utilisateurs malvoyants pour lesquels les informations textuelles ne sont pas (ou peu) accessibles.

Il peut également s'agir d'un utilisateur qui souhaite pouvoir écouter le contenu d'un article de presse en marchant dans la rue, plutôt que de devoir lire sur l'écran de son terminal mobile.

Il existe donc le besoin de mécanismes facilitant l'accès à des informations textuelles disponibles sur un serveur de contenu en convertissant ces informations textuelles en informations vocales avant transmission au terminal de communication.

Toutefois, une telle conversion soulève un problème supplémentaire, qui est celui de l'établissement de statistiques de consultations des informations. En effet, les fournisseurs de contenus désirent souvent disposer de telles statistiques, notamment afin de mieux connaître les intérêts des visiteurs et éventuellement adapter le contenu en fonction, ou comme argument commercial pour négocier avec des régis publicitaires pour louer de l'espace les pages web correspondant à ces informations textuelles.

De nombreux outils existent permettant d'établir des statistiques sur la consultation d'un site web. On peut par exemple citer les outils XiTi, Google Analytics, AwStats, WebAlizer...

Toutefois, ces outils ont des inconvénients et sont peu adaptés à la nature de certains types de contenu.

En effet, la plupart de ces outils fournissent des mesures sur la fréquence d'accès à une information, mais pas sur son intérêt pour la personne qui y accède.

Pour résoudre ces problèmes techniques, l'invention propose un dispositif d'aide à l'accès par un terminal de communication à des informations disponibles sur un serveur de contenu. Ce dispositif d'aide est, **caractérisé en ce qu**'il comporte
- des moyens de commande adapté pour recevoir des commandes d'une interface homme-machine du terminal de communication afin de piloter la transmission de ces informations, et
- des moyens de statistiques prévus pour mesurer le nombre d'accès aux informations et la quantité d'informations consultées.

Cette quantité d'informations consultées est déterminée par le nombre de mots convertis à partir desdites informations textuelles.

Selon un mode de réalisation de l'invention, les informations sont des informations textuelles et le dispositif d'aide comporte en outre des moyens de vocalisation prévus pour convertir ces informations textuelles en information vocales et pour transmettre les informations vocales à l'interface homme-machine du terminal de communication.

Selon un mode de réalisation, les moyens de statistiques sont prévus pour associer le nombre d'accès et la quantité d'informations consultées à un profil de l'utilisateur du terminal de communication.

Le dispositif d'aide peut en outre comporter des moyens de rapport prévus pour transmettre le nombre d'accès et la quantité d'informations consultées au serveur de contenu.

Les moyens de rapport peuvent former des agrégats à partir dudit nombre d'accès et de ladite quantité d'informations consultées et transmet les agrégats audit serveur de contenu.

Les moyens de commande peuvent être prévus pour déterminer la fin de la quantité d'information consultée à la réception d'une commande d'interruption, provisoire ou définitive, de la transmission des informations.

Le dispositif peut également comporter une mémoire apte à mémoriser les informations.

L'invention a également pour objets un terminal comportant un dispositif d'aide tel que décrit, ainsi qu'un procédé d'aide à l'accès à des informations textuelles disponibles sur un serveur de contenu par un terminal de communication qui se **caractérise en ce que** les informations textuelles sont transformées en informations vocales avant d'être transmises à une interface homme-machine du terminal de communication et en ce que des statistiques sont constituées à partir de mesures du nombre d'accès auxdites informations textuelles et de la quantité d'information consultée, c'est-à-dire le nombre de mots convertis.

L'invention et ses avantages apparaîtront de façon plus claire dans la description qui va suivre en liaison avec les figures annexées.

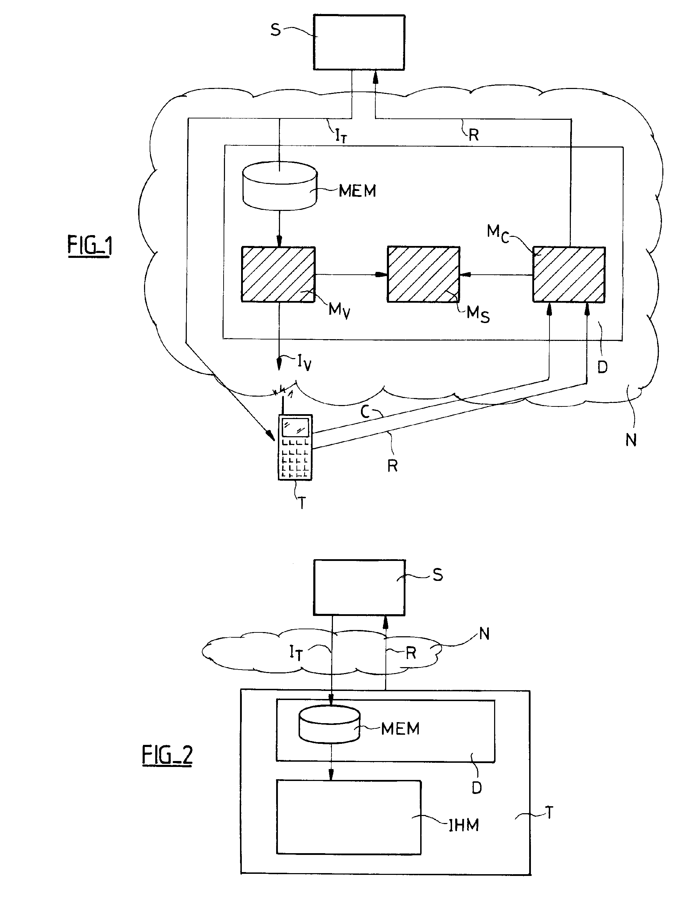

La figure 1 représente un exemple de réseau de communication dans lequel s'insère un dispositif selon l'invention.

Dans cet exemple de mise en oeuvre, un terminal de communication T et un serveur de contenu S sont connectés au travers d'un réseau de communication N. Ce réseau de communication peut être un réseau public de type « Internet », mais il peut aussi s'agir d'un réseau privé interne à un établissement ou un réseau virtuel privé de type « VPN » (Virtual Private Network) ou « Intranet ».

Dans cette mise en oeuvre, le dispositif d'aide selon l'invention est situé au sein du réseau de communication N et est distant du terminal de communication T.

Le terminal de communication peut être un ordinateur fixe ou portable, un assistant numérique personnel, un téléphone portable ou tout autre moyen permettant de se connecter à un tel réseau de communication et disposant d'un organe de production vocal.

Le terminal de communication T peut transmettre des requêtes R au serveur de contenu S. Ces requêtes peuvent être conformes au protocole HTTP (HyperText Transfer Protocol) tel que défini par le RFC 2616 de l'IETF. Il peut par exemple s'agir d'une requête « GET ». La requête spécifie l'adresse d'une ressource qui est typiquement identifiée par un identifiant de ressource URL (« Unified Resource Locator »), tel que défini par le RFC 1738 de l'IETF.

En réponse à une telle requête R, le serveur de contenu S répond par des informations textuelles I_{T} correspondant à cette ressource. Ces informations textuelles I_{T} peuvent être transmises directement au terminal de communication ou transmises à des moyens de vocalisation contenus dans un dispositif d'aide D. Dans le premier cas, les informations textuelles peuvent être transmises via le dispositif d'aide ou pas.

Il peut en effet être prévu que certaines informations textuelles uniquement soient vocalisées pour l'utilisateur du terminal. Par exemple, il peut vouloir consulter une liste textuelle de contenus disponibles et après sélection, recevoir ce contenu sous une forme vocalisée.

Différentes mises en oeuvre sont possibles pour déterminer quelles informations textuelles sont à transmettre directement au terminal de communication T et quelles informations textuelles sont à transmettre aux moyens de vocalisation pour conversion en information vocales I_{V}.

Le serveur de contenu S peut fixer cette détermination. Ainsi, les informations textuelles correspondant à des articles, textes d'une certaine longueur... peuvent être soumises à la vocalisation, tandis que les informations textuelles correspondant à des pages de navigation peuvent être transmises directement au terminal T.

Également, le dispositif d'aide peut déterminer ce choix, notamment en fonction de paramètres préalablement entrés par l'utilisateur.

Ainsi, celui-ci peut choisir de recevoir toutes les informations sous une forme vocalisée (y compris les pages de navigation). Cela peut être le cas si la personne est malvoyante par exemple.

Alternativement, il peut choisir de ne recevoir que les articles et textes d'une certaine longueur. Cela peut être le cas, par exemple, d'une personne voyante mais souhaitant par commodité écouter le texte plutôt que le lire (personne marchant dans la rue, contexte mal éclairé etc.)

Les informations textuelles I_{T} destinées à la vocalisation sont transmises à des moyens de vocalisation M_{V} contenus dans le dispositif d'aide D. Ces moyens de vocalisation M_{V} mettent en oeuvre un algorithme de conversion texte vers voix qui peut être connu en soi.

Selon une mise en oeuvre de l'invention, les informations textuelles I_{T} destinée à être traitées par les moyens de vocalisation M_{V} peuvent être mémorisée dans une mémoire MEM afin d'optimiser les performances et de minimiser les interactions entre le dispositif d'aide D et le serveur de contenu S. Cela peut par exemple permettre plusieurs conversions desdites informations textuelles en information vocales sans interroger plusieurs fois le serveur de contenu S.

Les moyens de vocalisation M_{V} transmettent ensuite les informations vocales I_{V} au terminal de communication T.

Cet événement peut déclencher la transmission d'un message interne au dispositif d'aide vers des moyens de statistiques M_{S}.

Ces moyens de statistiques M_{S} sont prévus pour mesurer le nombre d'accès aux informations I_{T} du serveur de contenu S et à la quantité d'information consultée.

Selon un mode de réalisation, ce message interne déclenche l'incrémentation d'un compte d'accès aux informations concernées et le démarrage d'un compteur de quantité d'informations transmises.

Ce compteur peut mesurer la durée de diffusion des informations vocales concernées. Alternativement, il peut mesurer un nombre de mots convertis et prononcés. D'autres possibilités sont bien évidemment possibles pour estimer la quantité d'information transmises à l'utilisateur du terminal de communication T.

A réception des informations vocales I_{V}, le terminal de communication T produit ces informations à l'aide d'un haut-parleur ou de tout autre organe de production vocale de son interface homme-machine. En outre, cette interface homme-machine permet de contrôler la transmission des informations vocales. Plus précisément, elle peut permettre à l'utilisateur de mettre la transmission en pause, de l'arrêter, de la redémarrer, éventuellement de revenir en arrière, d'accélérer etc.

En résultat d'une action de l'utilisateur sur cette interface homme-machine, une commande C peut être transmise à des moyens de commande M_{C} contenus dans le dispositif d'aide D. Les moyens de commande M_{C} peuvent alors piloter la transmission des informations vocales I_{V} vers le terminal de communication T.

Les moyens de commande M_{C} peuvent également transmettre des messages internes aux moyens de statistiques M_{S} dans la mesure où les commandes reçus C influent sur la quantité d'information consultée.

Ainsi, une commande d'arrêt peut permettre de déterminer la fin de la durée de diffusion. Une commande de mise en pause peut également mettre en pause le compteur temporel évoqué précédemment qui sera remis en marche par la réception d'une commande de lecture reçu par les moyens de commande M_{C}.

Le terminal de communication T peut en outre transmettre une nouvelle requête R, alors qu'il est en train de recevoir des informations vocales I_{V}. Cette requête peut être interprétée par le dispositif d'aide D comme une commande d'arrêt dans la mesure où un nouveau contenu va remplacer l'ancien. Par conséquent, les moyens de statistiques M_{S} traiteront cette requête R de façon similaire : le compteur temporel correspondant aux informations précédentes est stoppé tandis qu'un nouveau compteur est démarré dès réception des informations vocales I_{V} correspondant à la requête R.

La figure 2 illustre une mise en oeuvre alternative de l'invention dans laquelle le dispositif d'aide D est intégré au sein du terminal de communication T. Comme évoqué précédemment, le terminal de communication T dispose d'une interface IHM. Dans cette situation, les commandes C et les requêtes R qui sont émises à la suite d'actions sur l'interface homme-machine IHM vers le dispositif d'aide D sont des messages internes au terminal de communication T.

De même, les informations vocales I_{V} sont transmises, à l'intérieure même du terminal de communication, du dispositif d'aide D vers l'interface homme-machine IHM.

De même que précédemment, le dispositif d'aide D peut comporter une mémoire MEM permettant de mémoriser localement les informations textuelles. Cela peut permettre à l'utilisateur du terminal de communication T de les écouter plusieurs fois, sans pour autant recontacter le serveur de contenu S à chaque fois. Le fait toutefois que cette mémoire MEM soit intégrée au dispositif d'aide D permet d'établir des statistiques sur la consultation des réelles des informations, et non sur leur nombre d'accès sur un serveur de communication S.

Un dispositif d'agrégation peut être prévu dans le réseau de communication N afin d'agréger des statistiques générés par les moyens de statistiques de plusieurs terminaux mobiles avant de les remonter vers le serveur de contenu S, ou d'éventuels autres organes de gestion. Cette agrégation peut fournir des statistiques plus avancés comme des valeurs moyennes, etc.

Il n'a pas été détaillée l'architecture interne du dispositif d'aide D dans la figure 1, dans la mesure où celle-ci peut être similaire à celle décrite dans la mise en oeuvre de la figure 1. La suite des explications est faite en rapport avec la figure 1.

Les statistiques générées par le module de statistique M_{S} peuvent prendre plusieurs formats. Elles peuvent notamment représenter le fait qu'un utilisateur donné à consulté à un contenu donné 2 fois, une première fois complètement et une deuxième interrompu à 15%.

Elles peuvent également consolider des statistiques plus globales et par exemple fournir des données sur la durée moyenne d'écoute d'une information donnée, ou bien une durée au bout de laquelle un maximum d'utilisateurs interrompt la transmission (et ainsi permettre de détecter une information « nuisible » au sein d'un article, par exemple), etc.

Dans le contexte de la mise en oeuvre de la figure 2, les moyens de statistiques M_{S} ne peuvent fournir des informations que sur un (ou les quelques) utilisateurs du terminal de communication T. Le calcul de ces statistiques agrégées peut, comme évoqué précédemment, être pris en charge par un dispositif d'agrégation déporté au sein de réseau de communication N.

Également, les moyens statistiques peuvent être prévus pour associer le nombre d'accès et la durée d'information (ou d'autres données construites à partir de ceux-ci) à un profil d'utilisateur. Pour ce faire, le dispositif d'aide peut disposer de moyens de communication avec une base de profil d'utilisateurs. Les moyens de statistiques peuvent alors fournir des données plus fines en fonction de l'âge, de la zone géographique...)

Ces données mesurées ou élaborées par les moyens de statistiques peuvent être transmises via des moyens de rapport au serveur de contenu. Les données peuvent être agrégées avant d'être transmises afin de minimiser les communications vers le serveur de contenu.

La transmission peut être périodique : chaque jour, chaque semaine etc. Alternativement, le dispositif d'aide peut disposer d'une interface permettant au serveur de contenu S de récupérer ces données en fonction de son propre rythme. Dans les deux situations, il peut prévoir une mémoire permettant de mémoriser temporairement les données en question.

## Revendications

1. Dispositif (D) d'aide à l'accès par un terminal de communication (T) à des informations disponibles sur un serveur de contenu (S), comportant des moyens de commande (M_{C}) adapté pour recevoir des commandes (C) d'une interface homme machine dudit terminal de communication (T) afin de piloter la transmission desdites informations, et des moyens de statistiques (M_{S}) prévus pour mesurer le nombre d'accès auxdites informations et la quantité d'informations consultées, ladite quantité d'information consultée étant le nombre de mots converti desdites informations textuelles.

2. Dispositif d'aide selon la revendication précédente, dans lequel lesdites informations sont des informations textuelles (I_{T}), et comportant en outre des moyens de vocalisation (M_{V}) prévus pour convertir lesdites informations textuelles (I_{T}) en information vocales (I_{V}) et pour transmettre lesdites informations vocales à ladite interface homme-machine dudit terminal de communication (T).

3. Dispositif selon l'une des revendications précédentes, dans lequel lesdits moyens statistiques sont prévus pour associer le nombre d'accès et ladite quantité d'informations consultées à un profil de l'utilisateur dudit terminal de communication.

4. Dispositif selon l'une des revendications précédentes, comportant en outre des moyens de rapport prévus pour transmettre ledit nombre d'accès et ladite quantité d'informations consultées audit serveur de contenu.

5. Dispositif selon la revendication précédente, dans lequel lesdits moyens de rapport forment des agrégats à partir dudit nombre d'accès et de ladite quantité d'informations consultées et transmet lesdits agrégats audit serveur de contenu.

6. Dispositif selon l'une des revendications précédentes dans lequel lesdits moyens de commande (M_{C}) sont prévus pour déterminer la fin de ladite quantité d'information consultée à la réception d'une commande (C) d'interruption, provisoire ou définitive, de la transmission desdites informations.

7. Dispositif selon l'une des revendications 2 à 6, comportant en outre une mémoire (MEM) apte à mémoriser lesdites informations textuelles (I_{T}).

8. Dispositif selon l'une des revendications précédentes, dans lequel ladite quantité d'information consultée est la durée de diffusion desdites informations.

9. Dispositif selon l'une des revendications précédentes, dans lequel ladite interface homme-machine est distante dudit dispositif d'aide et accessible à travers un réseau de communication (N)

10. Terminal de communication, contenant un dispositif selon l'une des revendications 1 à 8.

11. Procédé d'aide à l'accès à des informations textuelles (I_{T}) disponibles sur un serveur de contenu (S) par un terminal de communication (T), dans lequel lesdites informations textuelles sont transformées en informations vocales avant d'être transmises à une interface homme-machine dudit terminal de communication (T) et en ce que des statistiques sont constituées à partir de mesures du nombre d'accès auxdites informations textuelles et de la quantité d'information consultée, ladite quantité d'information consultée étant le nombre de mots converti desdites informations textuelles.

## Revendications modifiées

### Revendications modifiées conformément à la règle 137(2) CBE.

**1.** Dispositif (D) d'aide à l'accès par un terminal de communication (T) à des informations textuelles disponibles sur un serveur de contenu (S), comportant des moyens de vocalisation (M_{V}) prévus pour convertir lesdites informations textuelles (I_{T}) en information vocales (I_{V}) et pour transmettre lesdites informations vocales à une interface homme-machine dudit terminal de communication (T) ; des moyens de commande (M_{C}) adapté pour recevoir des commandes (C) de ladite interface homme machine afin de piloter la transmission desdites informations ; et des moyens de statistiques (M_{S}) prévus pour mesurer le nombre d'accès auxdites informations et la quantité d'informations consultées, ladite quantité d'information consultée étant le nombre de mots converti desdites informations textuelles.

**2.** Dispositif selon l'une des revendications précédentes, dans lequel lesdits moyens statistiques sont prévus pour associer le nombre d'accès et ladite quantité d'informations consultées à un profil de l'utilisateur dudit terminal de communication.

**3.** Dispositif selon l'une des revendications précédentes, comportant en outre des moyens de rapport prévus pour transmettre ledit nombre d'accès et ladite quantité d'informations consultées audit serveur de contenu.

**4.** Dispositif selon la revendication précédente, dans lequel lesdits moyens de rapport sont prévus pour former des agrégats à partir dudit nombre d'accès et de ladite quantité d'informations consultées et pour transmettre lesdits agrégats audit serveur de contenu.

**5.** Dispositif selon l'une des revendications précédentes dans lequel lesdites moyens de commande (M_{C}) sont prévus pour déterminer la fin de ladite quantité d'information consultée à la réception d'une commande (C) d'interruption, provisoire ou définitive, de la transmission desdites informations.

**6.** Dispositif selon l'une des revendications précédentes, comportant en outre une mémoire (MEM) apte à mémoriser lesdites informations textuelles (I_{T}).

**7.** Dispositif selon l'une des revendications précédentes, dans lequel ladite interface homme-machine est distante dudit dispositif d'aide et accessible à travers un réseau de communication (N)

**8.** Terminal de communication, contenant un dispositif selon l'une des revendications 1 à 6.

**9.** Procédé d'aide à l'accès à des informations textuelles (I_{T}) disponibles sur un serveur de contenu (S) par un terminal de communication (T), dans lequel lesdites informations textuelles sont transformées en informations vocales avant d'être transmises à une interface homme-machine dudit terminal de communication (T) et en ce que des statistiques sont constituées à partir de mesures du nombre d'accès auxdites informations textuelles et de la quantité d'information consultée, ladite quantité d'information consultée étant le nombre de mots convertis desdites informations textuelles.
